# EUROPÄISCHE PATENTSCHRIFT

(11) **EP 3 285 155 B1**
(45) Veröffentlichungstag und Bekanntmachung des Hinweises auf die Patenterteilung: **11.10.2023**
(21) Anmeldenummer: 17186107.3
(22) Anmeldetag: 14.08.2017
(51) Int. Cl.: G06F 3/0482, G06F 3/0338, G06F 3/038, G06F 3/04892, H04N 5/445, H04N 21/422, H04N 21/47

(54) **ORGANIC HAPTIC INTERFACE**
ORGANIC HAPTIC INTERFACE
INTERFACE HAPTIQUE ORGANIQUE

(30) Priorität: 16.08.2016 DE 102016115210
(43) Veröffentlichungstag der Anmeldung: 21.02.2018
(73) Patentinhaber: fm marketing gmbh, 5202 Neumarkt am Wallersee (AT)
(72) Erfinder: FISCHER, THOMAS, 83457 Bayerisch Gmain (DE); Maier, Ferdinand, 5202 Neumarkt am Wallersee (AT)
(74) Vertreter: von Bülow & Tamada

(56) Entgegenhaltungen:
- WO-A1-2015/100154
- US-A- 6 128 006
- US-A1- 2007 002 018
- US-A1- 2009 140 985
- US-B1- 7 696 980

## Beschreibung

Die vorliegende Erfindung betrifft ein Verfahren zum Steuern eines Fokuselementes auf einem Bildschirm und ein Steuergerät zur Durchführung des Verfahrens.

Aus der EP 2 568 369 A1 ist ein Verfahren zum Navigieren eines Fokuselementes zur Hervorhebung von Menüpunkten einer Menüleiste auf einem Bildschirm durch eine Auslenken eines Betätigungsorgans auf einer Fernbedienung bekannt. Die Menüleiste ist in diesem Verfahren als Karteikasten mit hintereinander angeordneten Karteikarten ausgeführt, während das Fokuselement als größte Karteikarte im Vordergrund ausgeführt ist. In dem Verfahren wird ein von einem Auslenkungsgrad des Betätigungsorgans abhängiges erstes Steuersignal erfasst und das Fokuselement und die Menüpunkte relativ zueinander in Abhängigkeit bewegt, wenn das erste Steuersignal erfasst ist. In dem Verfahren verbleibt das Fokuselement und stets im Vordergrund an der selben Stelle, während die Karteikarten durch das Fokuselement hindurch geschoben werden.

Aus der WO 2015/100154 A1 und aus der US 7 696 980 B1 sind je ein Verfahren zum Navigieren eines Fokuselementes zur Hervorhebung von Menüpunkten einer Menüleiste auf einem Bildschirm durch eine Betätigung eines Betätigungsorgans auf einer Fernbedienung bekannt. In diesen Verfahren wird eine Auslenkung des Betätigungsorgans und eine Betätigungskraft, mit der das Betätigungsorgan ausgelenkt wird erfasst.

Aus der US 2009/140985 A1 ist ein Verfahren zum Navigieren auf einem Bildschirm durch eine Auslenkung eines Betätigungsorgans bekannt, umfassend Erfassen eines von einem Auslenkungsgrad des Betätigungsorgans abhängigen ersten Steuersignals und eines von einer Betätigungskraft, mit der das Betätigungsorgan ausgelenkt wird, abhängigen zweiten Steuersignals, und Navigation in Abhängigkeit einer Gegenüberstellung des zweiten Steuersignals und einer vorbestimmten Bedingung, wenn das erste Steuersignal erfasst ist, wobei die vorbestimmte Bedingung von einer vorbestimmten Kraft abhängig ist.

Aufgabe der Erfindung ist es, das bekannte Verfahren zu verbessern. Die Erfindung ist durch die unabhängigen Ansprüche definiert. Vorteilhafte Weiterbildungen der Erfindung sind in den abhängigen Ansprüchen definiert.

Gemäß einem Teilaspekt der Erfindung, umfasst ein Verfahren zum Navigieren eines Fokuselementes zur Hervorhebung von Menüpunkten einer Menüleiste auf einem Bildschirm durch ein Auslenken eines Betätigungsorgans auf einer Fernbedienung die Schritte Erfassen eines von einem Auslenkungsgrad des Betätigungsorgans abhängigen ersten Steuersignals und eines von einer Betätigungskraft, mit der das Betätigungsorgan ausgelenkt wird, abhängigen zweiten Steuersignals und Verschieben des Fokuselementes und der Menüpunkte relativ zueinander in Abhängigkeit einer Gegenüberstellung des zweiten Steuersignals und einer vorbestimmten Bedingung, wenn das erste Steuersignal erfasst ist.

Dem angegebenen Verfahren liegt die Überlegung zugrunde, dass in dem eingangs genannten Verfahren das Betätigungsorgan als Schieber ausgeführt und auf der Fernbedienung in Längsrichtung eindimensional verschiebbar ist. Auch die durch den Schieber bediente Menüleiste ist nur eindimensional durch das Fokuselement hindurch verschiebbar. So lässt sich zwar für den Schieber auf der Fernbedienung ein vergleichsweise langer Verschiebeweg mit einer Vielzahl verschiedener Zwischenpositionen realisieren, wodurch mit dem Schieber eine fein abgestufte Geschwindigkeitseinstellung des Fokuselementes beim Navigieren durch das Menü möglich ist. Je geringer jedoch der zur Verfügung stehende Verschiebeweg für das Betätigungsorgans ist, desto weniger Zwischenpositionen stehen für die Geschwindigkeitseinstellung des Fokuselementes zur Verfügung. Insbesondere weniger feinfühligen Benutzer fällt es bei kurzen Verschiebewegen schwer, eine einer gewünschten Geschwindigkeit entsprechende Zwischenposition mit dem Betätigungsorgan präzise anzusteuern oder einzustellen.

Kommt zusätzlich noch hinzu, dass das Betätigungsorgan nicht als - parallel zur Fernbedienungsoberfläche verschieblicher - Schieber geschoben sondern als - senkrecht zur Fernbedienungsoberfläche drückbare - Taste ausgeführt ist, dann kommt zu dem geringen Verschiebeweg noch hinzu, dass ein Mensch bei einer Druckbewegung gewöhnlich motorisch weniger feinfühlig ist, als bei einer Schiebebewegung. Deshalb ist das eingangs genannte Verfahren in einer Vielzahl von Anwendungsfällen für motorisch weniger feinfühlige Benutzer ungeeignet.

Zwar könnte versucht werden, die Benutzerfreundlichkeit des eingangs genannten Verfahren durch eine Bereitstellung eines ausreichend großen Verschiebeweges für ein möglichst breites Spektrum an Benutzern sicherzustellen, dies ist jedoch aufgrund des begrenzten Bauraumes auf einer Fernbedienung nicht immer möglich. Insbesondere wenn dann das Fokuselement zusätzlich noch in mehreren Menürichtungen zu steuern ist, muss dann bauraumbedingt auf Tasten als Betätigungsorgane zurückgegriffen werden, die prinzipbedingt keinen großen Verschiebeweg zulassen.

Um den Grundgedanken eines in seiner Geschwindigkeit steuerbaren Fokuselementes gemäß dem eingangs genannten Verfahren dennoch auf einer Fernbedienung verwenden zu können, wird mit dem angegebenen Verfahren vorgeschlagen, auf der Fernbedienung nicht nur das Steuersignal zur geschwindigkeitsvariablen Steuerung des Fokuselementes im Menü sondern noch ein weiteres zweites Steuersignal zu verwenden, aus dem ersichtlich ist, mit welcher Kraft der Benutzer das Betätigungsorgan bedient.

Diesem Vorschlag liegt die Überlegung zugrunde, dass ein motorisch weniger feinfühliger Benutzer deshalb kaum ausreichend Kontrolle über die oben genannten Zwischenpositionen hat, weil er bei der Bedienung des Betätigungsorgans in der Regel kaum eine geeignete Kraftkontrolle aufbringen kann, um eine für eine gewünschte Geschwindigkeit notwendige Zwischenposition anzufahren und dann im richtigen Moment das Betätigungsorgan wieder loszulassen, wenn sich das Fokuselement auf einem gewünschten Menüpunkt befindet. Ein solcher Benutzer verhält sich bei der Geschwindigkeitseinstellung der Menüleiste relativ zum Fokuselement regelungstechnisch gesehen wie ein PT2-Glied, weshalb er kaum in der Lage ist, die von ihm gewünschte Zwischenposition und damit die von ihm gewünschte Geschwindigkeit zu erreichen, bevor das Fokuselement den von ihm gewünschten Menüpunkt erreicht hat. Folglich bricht der Benutzer die Bewegung zwischen Fokuselement und Menüleiste entweder zu früh oder zu spät ab und erreicht so niemals den von ihm gewünschten Menüpunkt.

Hier greift das angegebene Verfahren mit dem Vorschlag an, das Fokuselement nicht nur in Abhängigkeit des Auslenkungsgrades des Betätigungsorgans sondern auch in Abhängigkeit der Betätigungskraft zu bewegen. Durch die Berücksichtigung der Betätigungskraft, mit der der Benutzer das Betätigungsorgan bedient, bei der Navigation des Fokuselementes in der Menüleiste kann ein zuvor genannter Benutzer mit schlechter Kraftkontrolle schnell erkannt werden und ein geeignetes Navigations- und damit Bewegungsverhalten für den Benutzer angewendet werden, damit dieser seinen gewünschten Menüpunkt auch ohne ausreichende Kraftkontrolle über das Betätigungsorgan anfahren kann.

In einer Weiterbildung des angegebenen Verfahrens ist das Betätigungsorgan eine Taste. Auf diese Weise kann auf der Fernbedienung in platzsparender Weise ein

Steuerkreuz untergebracht werden, mit dem das Fokuselement in beliebige Richtungen bewegbar ist.

In einem zusätzlichen Teilaspekt der Erfindung ist die vorbestimmte Bedingung von einer vorbestimmten Kraft abhängig. Auf diese Weise kann die oben genannte Gegenüberstellung durch einen einfachen Vergleich der in dem zweiten Betätigungssignal enthaltenen Betätigungskraft und der vorbestimmten Betätigungskraft durchgeführt werden.

Eine Möglichkeit, das Fokuselement für einen oben genannten Benutzer zu bewegen, der kaum ausreichend Kontrolle über die Geschwindigkeit des Fokuselementes entwickeln kann ist, das Fokuselement in diesem Fall in diskreten Schritten zu bewegen. Daher werden in einem zusätzlichen Teilaspekt der Erfindung das Fokuselement und die Menüpunkte örtlich diskret um einen Menüpunkt relativ zueinander verschoben, wenn die Gegenüberstellung des zweiten Steuersignals und der vorbestimmten Bedingung einer Betätigungskraft entspricht, die größer ist, als die vorbestimmte Kraft. Wenn die Gegenüberstellung des zweiten Steuersignals und der vorbestimmten Bedingung jedoch einer Betätigungskraft entspricht, die größer ist, als die vorbestimmte Kraft, dann werden das Fokuselement und die Menüpunkte in Abhängigkeit des Auslenkungsgrades des Betätigungsorgans relativ zueinander verschoben.

In einer anderen Weiterbildung des angegebenen Verfahrens ist die Abhängigkeit der Verschiebung des Fokuselementes von der Gegenüberstellung des zweiten Steuersignals und der vorbestimmten Bedingung zeitlich veränderlich. Auf diese Weise können bei der Auslegung der vorbestimmten Bedingung auch Kräfte berücksichtigt werden, die eigentlich zum Ansteuern einer Zwischenposition notwendig sind. Bringt der Benutzer eine solche Kraft jedoch zu schnell auf, dann deutet das auf einen oben genannten Benutzer hin, der kaum ausreichend Kontrolle über die Geschwindigkeit des Fokuselementes bekommen kann. Eine Möglichkeit, die Abhängigkeit der Verschiebung des Fokuselementes von der Gegenüberstellung des zweiten Steuersignals und der vorbestimmten Bedingung zeitlich abhängig zu gestalten ist, die Gegenüberstellung des zweiten Steuersignals und der vorbestimmten Bedingung nach Ablauf einer vorbestimmten Zeitdauer bei der Verschiebung des Fokuselementes zu ignorieren. Das Fokuselement wird dann zwischen den Menüpunkten mit der von der Eigenschaft des ersten Steuersignals abhängigen Geschwindigkeit nach Ablauf einer vorbestimmten Zeitdauer unabhängig von der Gegenüberstellung des zweiten Steuersignals und der vorbestimmten Bedingung bewegt.

In einer anderen Weiterbildung des angegebenen Verfahrens ist die Verschiebung des Fokuselementes und der Menüpunkte relativ zueinander vom Auslenkungsgrad des Betätigungsorgans abhängig. In diesem Fall kann das zweite Steuersignal zeitlich aus dem ersten Steuersignal abgeleitet werden, weil aus dieser Ableitung unmittelbar die Beschleunigung des Betätigungsorgans und damit die Betätigungskraft hervorgeht.

Gemäß einem weiteren Aspekt der Erfindung ist eine Steuervorrichtung eingerichtet, um eines der angegebenen Verfahren durchzuführen.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte des angegebenen Verfahrens durchzuführen, wenn das Computerprogramm auf einem elektronischen Gerät oder einer der angegebenen Vorrichtungen ausgeführt wird.

Gemäß einem weiteren Ausführungsbeispiel enthält ein Computerprogrammprodukt einen Programmcode, der auf einem computerlesbaren Datenträger gespeichert ist und der, wenn er auf einer Datenverarbeitungseinrichtung ausgeführt wird, das angegebene Verfahren durchführt.

Gemäß einem weiteren Ausführungsbeispiel umfasst eine Multimedia-Anordnung einen Bildschirm mit einem Menü, in dem ein Fokuselement zur Auswahl von Medien bewegbar ist, eine Fernbedienung zur Steuerung des Fokuselementes, und eine der angegebenen Steuervorrichtungen. Dabei kann die angegebene Steuervorrichtung sowohl in der Fernbedienung als auch bildschirmseitig angeordnet sein.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine schematische Darstellung einer Multimedia-Anordnung mit einem Bildschirm und einer Fernbedienung,
Fig. 2 einen Kraft-Weg-Verlauf beim Drücken einer Taste auf der Fernbedienung der Fig. 1,
Fig. 3 einen Weg-Geschwindigkeitsverlauf mit dem beim Drücken der Taste auf der Fernbedienung der Fig. 1 ein Fokuselement und eine Menüleiste auf dem Bildschirm der Fig. 1 relativ zueinander bewegt werden,
Fig. 4 einen ersten zeitlichen Kraftverlauf beim Drücken einer Taste auf der Fernbedienung der Fig. 1, und
Fig. 5 einen zweiten zeitlichen Kraftverlauf beim Drücken einer Taste auf der Fernbedienung der Fig. 1.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

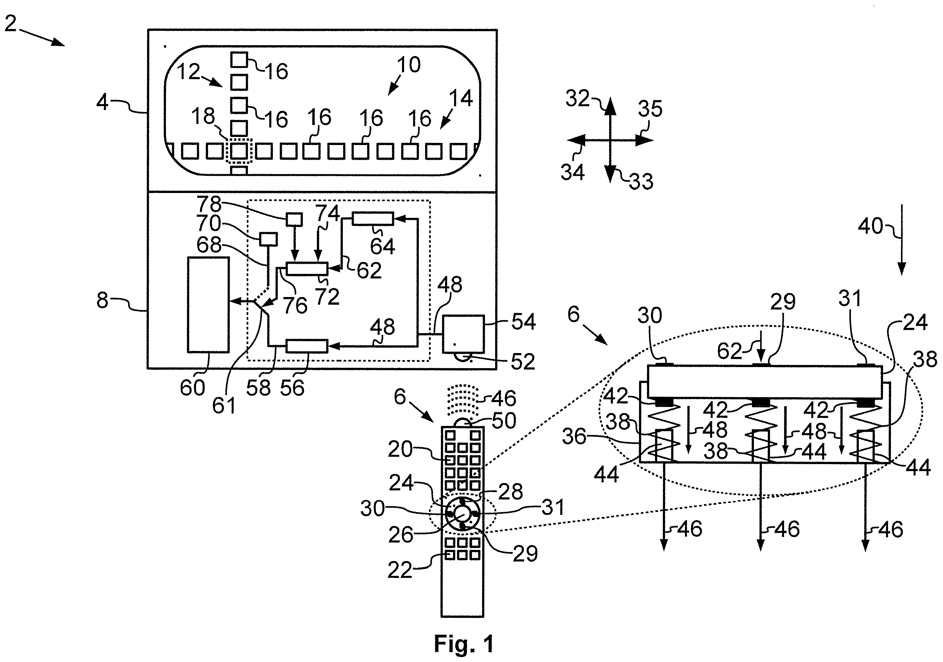

Es wird auf Fig. 1 Bezug genommen, die eine Multimedia-Anordnung 2 mit einem Bildschirm 4 und einer Fernbedienung 6 zeigt. Integriert in den Bildschirm 4 der Fig. 1 ist ein Medienwiedergabegerät 8, wie beispielsweise eine Set-Top-Box, die jedoch auch unabhängig vom Bildschirm 4 bereitgestellt und an diesen über eine Signalverbindung angeschlossen sein kann.

Mit dem Medienwiedergabegerät 8 können auf dem Bildschirm 4 visuelle Medien wie Filme, Bilder oder dergleichen dargestellt werden. Die Auswahl sowie Einstellungen zur Wiedergabe dieser Medien erfolgen über ein in Fig. 1 dargestelltes Menü 10. Das dargestellte und nachstehend näher erläuterte Menü 10 ist rein beispielhaft und kann beliebig ausgeführt sein. Ein alternatives Menü kann beispielsweise der EP 2 568 369 A1 entnommen werden.

Das Menü 10 umfasst in der vorliegenden Ausführung eine vertikale Menüleiste 12 und eine horizontale Menüleiste 14. Die vertikale Menüleiste 12 setzt sich aus einer Vielzahl von vertikal übereinander angeordneten Menüpunkten 16 zusammen, während sich die horizontale Menüleiste 14 aus einer Vielzahl an horizontal nebeneinander angeordneten Menüpunkten 16 zusammensetzt. Von den Menüpunkten 16 sind in Fig. 1 der Übersichtlichkeit halber nicht alle mit einem eigenen Bezugszeichen versehen. Über die einzelnen Menüpunkte 16 der vertikalen Menüleiste 12 sowie der horizontalen Menüleiste 14 können entweder die wiederzugebenden Medien ausgewählt oder das Wiedergabeverhalten für ein ausgewähltes Medium eingestellt werden.

Hierzu schneiden sich die beiden Menüleisten 12, 14 in einem Schnittpunkt 18. Menüpunkte 16, die auf diesem Schnittpunkt 18 liegen gelten als ausgewählt und sind aufgrund ihrer Lage auf dem Schnittpunkt 18 für den Benutzer klar als ausgewählt erkennbar. Der Schnittpunkt 18 dient deshalb als Fokuselement, das dem Benutzer einen ausgewählten Menüpunkt 16 hervorhebt. Eine hinter einem als ausgewählt geltenden Menüpunkt 16 stehende Funktion, wie beispielsweise ein wiederzugebendes Medium oder eine Einstellung kann über die Fernbedienung 6 beispielsweise durch Drücken einer speziellen Taste aktiviert werden. Bevor hierauf näher eingegangen wird, soll zunächst der Aufbau der Fernbedienung 6 näher beschrieben werden.

Die Fernbedienung 6 umfasst ein erstes Tastenfeld 20 und ein zweites Tastenfeld 22, die beide über einen Cursorring 24 mit einer zentrisch darin liegenden Bestätigungstaste 26 getrennt sind. Die beiden Tastenfelder 20, 22 sind zur Erläuterung des Ausführungsbeispiels nicht weiter von Bedeutung.

Zur Navigation in dem Menü 10 und zur Auswahl eines Menüpunktes 16 besitzt die Fernbedienung 6 auf dem Cursorring 24 in die Bildebene hinein gesehen eine Auf-Richtungstaste 28, eine Ab-Richtungstaste 29, eine Links-Richtungstaste 30 und eine Rechts-Richtungstaste 31. Mit der Auf-Richtunstaste 28 sollen die Menüpunkte 16 der vertikalen Menüleiste 12 in einer Richtung 32 nach oben durch den Schnittpunkt 18 geschoben werden. Mit der Ab-Richtungstaste 29 sollen die Menüpunkte 16 der vertikalen Menüleiste 12 in einer Richtung 33 nach unten durch den Schnittpunkt 18 geschoben werden. Mit der Linkts-Richtungstaste 30 sollen die Menüpunkte 16 der horizontalen Menüleiste 14 in einer Richtung 34 nach links durch den Schnittpunkt 18 geschoben werden. Mit der Rechts-Richtungstaste 31 sollen die Menüpunkte 16 der horizontalen Menüleiste 14 in einer Richtung 35 nach rechts durch den Schnittpunkt 18 geschoben werden. Menüpunkte 16, die innerhalb des Schnittpunktes 18 liegen gelten, wie bereits erläutert, als ausgewählt und sollen mit der Betätigungstaste 26 aktiviert oder deaktiviert werden.

Um die technische Umsetzung der zuvor genannte Menüführung mit der Fernbedienung 6 näher zu erläutern, ist der Cursorring 24 mit der unteren Drucktaste 29, der linken Drucktaste 30 und der rechten Drucktaste 31 in Fig. 1 in einer vergrößerten Detailansicht in einer Seitenansicht abgebildet.

Der Cursorring 24 ist an seinen Richtunstasten 28 bis 31 in einem Gehäuse 36 der Fernbedienung 6 über Rückstellelemente 38 abgestützt. Diese Rückstellelemente 38 sind hier beispielhaft als Federn ausgeführt. Alternative Ausführungsmöglichkeiten, wie beispielsweise gegenpolig zueinander angeordnete Magnete als Rückstellelemente 38 wären gleichwertig möglich. Der Benutzer kann die Richtungstasten 28 bis 31 des Cursorrings 24 zur oben erwähnten Navigation der Menüpunkte 16 im Menü 10 drücken, wobei die Rückstellelemente 38 nach einem Lösen des Druckes durch den Benutzer die entsprechende Richtungstaste 28 bis 31 wieder in eine Ausgangsposition zurücksetzen.

In einer Druckrichtung 40 der Richtungstasten 28 bis 31 gesehen unterhalb der Richtungstasten 28 bis 31 ist jeweils ein Geberelement 42, beispielsweise in Form eines Gebermagneten angeordnet. In der Druckrichtung 40 gesehen unterhalb der Geberelemente 42 ist je ein Messaufnehmer 44 angeordnet, der ein nicht weiter dargestelltes Geberfeld des Geberelementes 42 aufnimmt und in ein Messsignal 46 umwandelt. Da die Stärke des den jeweiligen Messaufnehmer 44 durchdringenden Geberfeldes von der Position des Geberelementes 42 über dem Messaufnehmer 44 abhängt, kann ein Messsignal 46 generiert werden, das von einer Drucktiefe 48 der jeweiligen gedrückten Richtungstaste 28 bis 31 abhängt.

Das von der Drucktiefe 48 abhängige Messsignal 46 wird dann zur Navigation des Menüs 10 zusammen mit einem nicht weiter zu sehenden Indikator, welche der Richtungstasten 28 bis 31 gedrückt wurde, drahtlos von einem Übertrager 50 in der Fernbedienung 6 zu einem Empfänger 52 im Medienwiedergabegerät 8 gesendet und dort informationstechnisch verarbeitet, um die oben erläuterte Bewegung der Menüleisten 12, 14 zu steuern.

Nach dem Empfänger 52 leitet eine Filtereinrichtung 54 zunächst die Drucktiefe 48 aus dem Messsignal 46 ab. Mit einer Geschwindigkeitskennlinie 56 wird die Drucktiefe 48 dann einer Geschwindigkeit 58 zugeordnet. In Abhängigkeit davon, welche der Richtungstasten 28 bis 31 der nicht weiter dargestellte Indikator als gedrückt andeutet, wird dann die der Richtungstaste 28 bis 31 zugeordnete Menüleiste 12, 14 in der der gedrückten Richtungstaste 28 bis 31 entsprechenden Richtung 32 bis 35 durch den Schnittpunkt 18 mit der Geschwindigkeit 58 bewegt. Die Steuerung dieser Bewegung kann durch eine Videosteuereinrichtung 60 erfolgen, der die Geschwindigkeit 58 über einen später näher beschriebenen Schalter 61 zugeführt wird. Durch Verändern der Drucktiefe 48 kann der Benutzer die Geschwindigkeit 58 anpassen. Sobald sich ein vom Benutzer gewünschter Menüpunkt 16 im Schnittpunkt 18 befindet, kann dieser die gedrückte Richtungstaste 28 bis 31 wieder lösen, so dass die die entsprechend bewegte Menüleiste 12, 14 anhält und der zu Auswahl gewünschte Menüpunkt 16 im Schnittpunkt zum Stehen kommt.

Der Vorteil der Einstellbarkeit der Geschwindigkeit 58 über die Drucktiefe 48 der Richtungstasten 28 bis 31 ist, dass sich die Menüleisten 12, 14 schnell bewegen lassen, wenn der zur Auswahl gewünschte Menüpunkt 16 vom fokusierenden Schnittpunkt 18 noch weit entfernt ist. Nahe am fokusierenden Schnittpunkt 18 können dann die Menüleisten 12, 14 langsamer bewegt werden, damit der Benutzer die entsprechend gedrückte Richtungstaste 28 bis 31 leichter im richtigen Moment lösen kann.

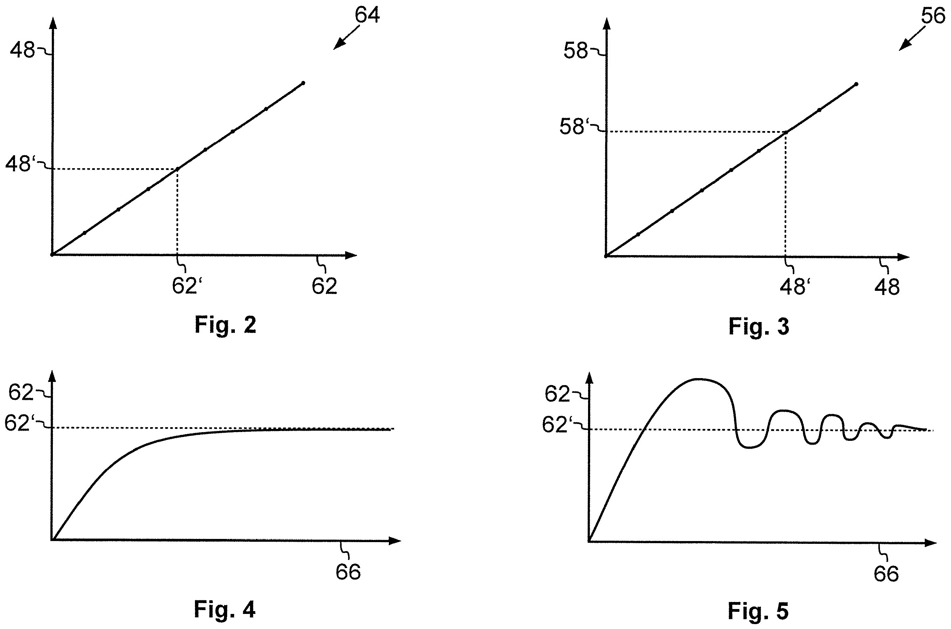

Aufgrund des Rückstellelementes 38 hängt die Drucktiefe 48 von einer Benutzerkraft 62 ab, mit der der Benutzer die entsprechende Richtungstaste 28 bis 31 auf dem Cursorring 24 niedergedrückt. Diese Benutzerkraft ist in Fig. 1 an der Ab-Richtungstaste 29 angedeutet. Für Benutzer, die aufgrund fehlender Erfahrungen im Umgang mit der Fernbedienung 6, fehlender Fertigkeiten oder anderer Gründe nicht in der Lage sind, die Benutzerkraft 62 sinnvoll zur Einstellung der Drucktiefe 48 und damit der Geschwindigkeit 58 zu kontrollieren, kann es hierbei jedoch schwierig werden, mit dem zuvor genannten System einen gewünschten Menüpunkt 16 sicher im fokusierenden Schnittpunkt 18 zu plazieren. Um diesen Benutzern dennoch eine Navigation im Menü 10 mit der Fernbedienung 6 zu ermöglichen, ohne das gesamte System verändern zu müssen, wird die Geschwindigkeit 58, mit der die Menüpunkte 16 der Menüleisten 12, 14 durch den Schnittpunkt 18 geschoben werden, zusätzlich zur Drucktiefe 48 noch in Abhängigkeit der Benutzerkraft 62 ausgeführt. Der Hintergrund zu dieser Idee wird nachstehend anhand der Fig. 2 bis 5 näher erläutert.

Aus der Kennlinie 64 des Rückstellelementes 38 der Fig. 2, in der Benutzerkraft 62 der Drucktiefe 48 gegenübergestellt ist und der Geschwindigkeitskennlinie 56 der Fig. 3, in der die Drucktiefe 48 der Geschwindigkeit 58 gegenübergestellt ist, ist unmittelbar ersichtlich, dass der Benutzer zum Einstellen einer bestimmten Geschwindigkeit 58' eine bestimmte Drucktiefe 48' mit einer bestimmten Benutzerkraft 62' erreichen muss.

Beim Einstellen der Benutzerkraft 62 verhält sich ein geübter Benutzer regelungstechnisch gesehen normalerweise wie ein PT1-Glied. Dies ist in Fig. 4 über die Zeit 66 gezeigt. Der Benutzer steigert über die Zeit 66 gesehen die Benutzerkraft 62 immer weiter weiter und nähert sich der für die gewünschte Geschwindigkeit 58' einzustellenden Benutzerkraft 62' asymptotisch an.

Anders verhält sich ein ungeübter Benutzer beim Einstellen der Benutzerkraft 62, was in Fig. 5 angedeutet ist. Er verhält sich regelungstechnisch gesehen wie ein PT2-Glied und steigert zunächst seine Benutzerkraft zu schnell. Dadurch übersteigt er die für die gewünschte Geschwindigkeit 58' einzustellende Benutzerkraft 62' und muss seine Benutzerkraft 62 ständig korrigieren. Im schlimmsten Fall erreicht er die einzustellende Benutzerkraft 62' nie.

Um für diese Benutzer dennoch ein mit der Fernbedienung 6 navigierbares Menü 10 bereit zu stellen ist der Schalter 61 in dem Medienwiedergabegerät 8 vorhanden. Der Schalter 61 schaltet die Bewegung der Menüpunkte 16 der beiden Menüleisten 12, 14 zwischen zwei verschiedenen Bewegungsprinzipien um. Das erste Bewegungsprinzip wurde zuvor beschrieben und bewegt die Menüpunkte mit einer Geschwindigkeit 58 in Abhängigkeit der Drucktiefe 48 und damit der Betätigungskraft 62. Im Rahmen des zweiten Ansatzes sollen die Menüpunkte 16 um einen Menüpunkt 16 in eine der gedrückten Richtungstaste 28 bis 31 entsprechenden Richtung 32 bis 35 entsprechenden Richtung weiterbewegt werden, wenn der Benutzer die entsprechende Richtungstaste 28 bis 31 drückt. Eine erneute Bewegung der Menüpunkte 16 um einen weiteren Menüpunkt-Schritt soll erst erfolgen, nachdem der Benutzer die entsprechende Richtungstaste 28 bis 31 gelöst und wieder erneut gedrückt hat.

Ein entsprechendes Bewegungsschema 68 kann in einem Speicher 70 hinterlegt sein und über den Schalter 61 in der nachstehenden Weise ausgewählt werden, wenn die Betätigungskraft 62 des Benutzers ein Verhalten wie ein PT2-Glied nahelegt.

Hierzu wird in der vorliegenden Ausführung die Drucktiefe 48 nach dem Empfang im Medienwiedergabegerät 8 basierend auf der bekannten Kennlinie 64 des Rückstellelementes 38 zurück in die Betätigungskraft 62 umgewandelt. Diese Betätigungskraft 62 wird dann in einem Analyseblock 72 einer vorbestimmten Betätigungskraft 74 gegenübergestellt.

Zur Gegenüberstellung wird die Betätigungskraft 62 in der vorliegenden Ausführungsform mit der vorbestimmten Betätigungskraft 74 verglichen. Solange die Betätigungskraft 62 des Benutzers kleiner ist, als die vorbestimmte Betätigungskraft 74, steuert der Analyseblock 72 den Schalter 61 mit einem Ansteuersignal 76 derart an, dass der Bewegung der Menüpunkte 16 die Geschwindigkeit 58 zugrunde gelegt wird. Übersteigt die Betätigungskraft 62 des Benutzers die vorbestimmte Betätigungskraft 74 dann wird der Bewegung der Menüpunkte 16 das Bewegungsschema 68 aus dem Speicher 70 zugrunde gelegt.

Optional kann ferner ein Timer 78 vorhanden sein, der die Wirkung des Analyseblockes 72 nach Ablauf einer bestimmten Zeitdauer deaktiviert und so dass der Bewegung der Menüpunkte 16 dauerhaft die Geschwindigkeit 58 zugrunde gelegt wird. Das heißt, dass auf diese Weise berücksichtigt wird, ob die Benutzerkraft innerhalb einer bestimmten Zeit die vorbestimmte Benutzerkraft 74 übersteigt. Hierdurch wird die vorbestimmte Benutzerkraft 74 nicht absolut als Kriterium betrachtet, sondern zusammen mit der Zeitdauer als ein vorbestimmter bestimmter Kraftanstieg. Anhand eines überhöhten Kraftanstieges eines Benutzers lässt sich sein Benutzerverhalten nicht nur viel früher richtig abschätzen, sondern auch mit niedrigeren Schwellen für die Betätigungskraft 62.

In Fig. 1 sind die Elemente zwischen dem Empfänger 54 und der Videosteuereinrichtung 60, die das zuvor beschriebene Verfahren durchführen mit einer gestrichelten Linie umrandet. Die innerhalb dieser Umrandung angedeuteten Verfahrensschritte müssen nicht zwangsläufig im Medienwiedergabegerät 8 ausgeführt werden. Es wäre genauso denkbar, die gestrichelt umrandeten Schritte in der Fernbedienung 6 durchzuführen dann statt der Drucktiefe 48 die Geschwindigkeit 58 oder das Bewegungsschema 68 je nach Stellung des Schalters 61 zu übertragen. Werden die gestrichelt umrandeten Schritte als Steuervorrichtung interpretiert, so kann diese daher beliebig auf der Seite des Bildschirms 4 oder auf der Seite der Fernbedienung angeordnet werden.

Zur Ausführung des zuvor erläuterten Verfahrens wurden Funktionseinheiten, Schalter und dergleichen lediglich der Übersichtlichkeit halber gewählt und stellen keinerlei Einschränkung dar. Das gesamte Verfahren lässt sich beliebig realisieren, beispielsweise auch in Form eines Computerprogramms.

## Patentansprüche

1. Verfahren zum Navigieren eines Fokuselementes (18) zur Hervorhebung von Menüpunkten (16) einer Menüleiste (12, 14) auf einem Bildschirm (4) durch eine Auslenken eines Betätigungsorgans (28 bis 31) auf einer Fernbedienung(6), umfassend:
- Erfassen eines von einem Auslenkungsgrad des Betätigungsorgans (28 bis 31) abhängigen ersten Steuersignals (48) und eines von einer Betätigungskraft (62), mit der das Betätigungsorgan (28 bis 31) ausgelenkt wird, abhängigen zweiten Steuersignals (62); und
- Verschieben des Fokuselementes (18) und der Menüpunkte (16) relativ zueinander in Abhängigkeit einer Gegenüberstellung (72) des zweiten Steuersignals (62) und einer vorbestimmten Bedingung (74), wenn das erste Steuersignal (48) erfasst ist, wobei die vorbestimmte Bedingung (72) von einer vorbestimmten Kraft abhängig ist, wobei das Fokuselement (18) und die Menüpunkte (16) örtlich diskret um einen Menüpunkt (16) relativ zueinander verschoben (68) werden, wenn die Gegenüberstellung (72) des zweiten Steuersignals (62) und der vorbestimmten Bedingung (74) einer Betätigungskraft entspricht, die größer ist, als die vorbestimmte Kraft und wobei das Fokuselement (18) und die Menüpunkte (16) in Abhängigkeit des Auslenkungsgrades des Betätigungsorgans (28 bis 31) relativ zueinander verschoben (58) werden, wenn die Gegenüberstellung (72) des zweiten Steuersignals (62) und der vorbestimmten Bedingung (74) einer Betätigungskraft entspricht, die kleiner ist, als die vorbestimmte Kraft.

2. Verfahren nach Anspruch 1, wobei das das Betätigungsorgan (28 bis 31) eine Taste auf der Fernbedienung (6) ist.

3. Verfahren nach einem der vorstehenden Ansprüche, wobei die Abhängigkeit der Verschiebung des Fokuselementes (18) und der Menüpunkte (16) relativ zueinander von der Gegenüberstellung (72) des zweiten Steuersignals (62) und der vorbestimmten Bedingung (72) zeitlich veränderlich ist.

4. Verfahren nach einem der vorstehenden Ansprüche, wobei die Verschiebung des Fokuselementes (18) und der Menüpunkte (16) relativ zueinander nach Ablauf einer vorbestimmten Zeitdauer (78) unabhängig von der Gegenüberstellung (72) des zweiten Steuersignals (62) und der vorbestimmten Bedingung (74) erfolgt.

5. Verfahren nach Anspruch 6, wobei das zweite Steuersignal (62) aus dem ersten Steuersignal (48) abgeleitet wird.

6. Steuervorrichtung umfassend einen Speicher und einen Prozessor, wobei das Verfahren nach einem der vorstehenden Ansprüche in Form eines Computerprogramms in dem Speicher hinterlegt ist und der Prozessor zur Ausführung des Verfahrens vorgesehen ist, wenn das Computerprogramm aus dem Speicher in den Prozessor geladen ist.

7. Computerprogramm umfassend Programmcodemittel, um alle Schritte eines Verfahrens nach einem der Ansprüche 1 bis 5 durchzuführen, wenn das Computerprogramm auf einer Steuervorrichtung nach Anspruch 6 ausgeführt wird.

## Claims

1. Method for navigating a focus element (18) to highlight menu items (16) on a menu bar (12, 14) on a screen (4) by deflecting an actuator (28 to 31) on a remote control (6), comprising:
- Capturing a first control signal (48) dependent on a deflection degree of the actuator (28 to 31) and a second control signal (62) dependent on an actuation force (62) with which the actuator (28 to 31) is deflected; and
- Moving the focus element (18) and the menu items (16) relative to each other depending on a comparison (72) of the second control signal (62) and a predetermined condition (74) when the first control signal (48) is captured, wherein the predetermined condition (72) depends on a predetermined force, and the focus element (18) and menu items (16) are discretely shifted by one menu item (16) relative to each other (68) when the comparison (72) of the second control signal (62) and the predetermined condition (74) corresponds to an actuation force greater than the predetermined force, and the focus element (18) and the menu items (16) are shifted relative to each other (58) depending on the deflection degree of the actuator (28 to 31) when the comparison (72) of the second control signal (62) and the predetermined condition (74) corresponds to an actuation force less than the predetermined force.

2. Method according to claim 1, wherein the actuator (28 to 31) is a button on the remote control (6).

3. Method according to any of the preceding claims, wherein the dependence of the movement of the focus element (18) and the menu items (16) relative to each other on the comparison (72) of the second control signal (62) and the predetermined condition (72) varies over time.

4. Method according to any of the preceding claims, wherein the shift of the focus element (18) and the menu items (16) relative to each other occurs after the lapse of a predetermined period (78) regardless of the comparison (72) of the second control signal (62) and the predetermined condition (74).

5. Method according to claim 6, wherein the second control signal (62) is derived from the first control signal (48).

6. Control device comprising a memory and a processor, wherein the method according to any of the preceding claims is stored in the form of a computer program in the memory, and the processor is designed to execute the method when the computer program is loaded from the memory into the processor.

7. Computer program comprising program code means for performing all steps of a method according to any of claims 1 to 5 when the computer program is executed on a control device according to claim 6.

## Revendications

1. Procédé pour naviguer un élément de focus (18) afin de mettre en évidence des éléments de menu (16) sur une barre de menu (12, 14) sur un écran (4) en déviant un organe d'actionnement (28 à 31) sur une télécommande (6), comprenant :
- la capture d'un premier signal de commande (48) dépendant d'un degré de déviation de l'organe d'actionnement (28 à 31) et d'un deuxième signal de commande (62) dépendant d'une force d'actionnement (62) avec laquelle l'organe d'actionnement (28 à 31) est dévié ; et
- le déplacement de l'élément de focus (18) et des éléments de menu (16) l'un par rapport à l'autre en fonction d'une comparaison (72) du deuxième signal de commande (62) et d'une condition prédéfinie (74) lorsque le premier signal de commande (48) est capturé, la condition prédéfinie (72) dépendant d'une force prédéfinie, et l'élément de focus (18) et les éléments de menu (16) sont discrètement déplacés par un élément de menu (16) l'un par rapport à l'autre (68) lorsque la comparaison (72) du deuxième signal de commande (62) et de la condition prédéfinie (74) correspond à une force d'actionnement supérieure à la force prédéfinie, et l'élément de focus (18) et les éléments de menu (16) sont déplacés l'un par rapport à l'autre (58) en fonction du degré de déviation de l'organe d'actionnement (28 à 31) lorsque la comparaison (72) du deuxième signal de commande (62) et de la condition prédéfinie (74) correspond à une force d'actionnement inférieure à la force prédéfinie.

2. Procédé selon la revendication 1, où l'organe d'actionnement (28 à 31) est un bouton sur la télécommande (6).

3. Procédé selon l'une des revendications précédentes, où la dépendance du déplacement de l'élément de focus (18) et des éléments de menu (16) l'un par rapport à l'autre sur la comparaison (72) du deuxième signal de commande (62) et de la condition prédéfinie (72) varie dans le temps.

4. Procédé selon l'une des revendications précédentes, où le déplacement de l'élément de focus (18) et des éléments de menu (16) l'un par rapport à l'autre se produit après l'écoulement d'une période prédéfinie (78) indépendamment de la comparaison (72) du deuxième signal de commande (62) et de la condition prédéfinie (74).

5. Procédé selon la revendication 6, où le deuxième signal de commande (62) est dérivé du premier signal de commande (48).

6. Dispositif de commande comprenant une mémoire et un processeur, où le procédé selon l'une des revendications précédentes est stocké sous forme de programme informatique dans la mémoire, et le processeur est conçu pour exécuter le procédé lorsque le programme informatique est chargé de la mémoire dans le processeur.

7. Programme informatique comprenant des moyens de code de programme pour effectuer toutes les étapes d'un procédé selon l'une des revendications 1 à 5 lorsque le programme informatique est exécuté sur un dispositif de commande selon la revendication 6.
